# EUROPEAN PATENT SPECIFICATION

(11) **EP 2 007 082 B1**
(45) Date of publication and mention of the grant of the patent: **12.05.2010**
(21) Application number: 07290769.4
(22) Date of filing: 20.06.2007
(51) Int. Cl.: H04L 12/56, H04L 12/24

(54) **Congestion resolution in a telecommunication network**
Überlastungsauflösung in einem Telekommunikationsnetzwerk
Résolution de congestion dans un réseau de télécommunication

(43) Date of publication of application: 24.12.2008
(73) Proprietor: Alcatel Lucent, 75008 Paris (FR)
(72) Inventor: Miyazawa, Hamilton Hideki, 2000 Antwerp (BE); Batsleer, Claudine, 9860 Scheldewindeke (BE)
(74) Representative: Narmon, Gisèle Marie Thérèse

(56) References cited:
- WO-A-97/35409
- US-B1- 6 459 682

## Description

The present invention relates to a method for resolving congestions in a telecommunication network comprising a plurality of interconnected nodes all coupled to a Network Manager, each node being further coupled to a distinct Customer Equipment at a corresponding site.

Today, existing solutions to resolve congestions in such a telecommunication network are based either on:
- Network resources over-provisioning. In this case, no network congestion is possible. However, the drawback is a higher network infrastructure cost; or
- Manual operator network analysis and reconfiguration: The drawback is then a worse service level agreement, due to the required time to execute the task, and scalability of the solution.

An object of the present invention is to provide a method that introduces a simple logic in order to find the network congestion point with a single interaction with the network elements.

According to the invention, this object is achieved due to the fact that said congestion is indicated by a trigger received at said network manager from a first site involved in said congestion, said trigger further comprising a Network Event Notification indicating the service level agreement for a predetermined traffic class from a second site to said first site,
***in that,*** upon reception of said trigger, said network manager retrieves from the first node coupled to said first site traffic statistics for said predetermined traffic class,
***and in that***
if said traffic statistics indicate that the number of lost packets for said predetermined traffic class has increased for said first node, said network manager updates the policy configuration of the link between said first node and the first Customer Equipment of said first site,
otherwise, if said traffic statistics indicate that the number of lost packets for said predetermined traffic class has not increased for said first node, said network manager updates the policy configuration of the link between the second Customer Equipment of said second site and the second node coupled thereto.

Although some prior art documents (see WO 97/35409) already discloses the use of a trigger for indicating a congestion, the characteristics that the trigger comprises a Network Event Notification indicating the service level agreement and the actions taken by the network manager upon reception of said trigger are not known from the prior art.

In this way, the network congestion point (PE.A or PE.B for the communication between Site A and Site B) is automatically determined from the trigger. Furthermore, the congestion can be resolved with minimum interaction between the network elements owing to the external event notification regarding a specific traffic class from one access site to another.

In a preferred characterizing embodiment of the present invention, said trigger is provided by a Deep Packet Inspection associated to the first Customer Equipment of said first site.

This solution provides a fast network policy configuration adaptation upon network congestion notifications, therefore allowing a more restrictive service level agreement.

Further characterizing embodiments of the present method are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

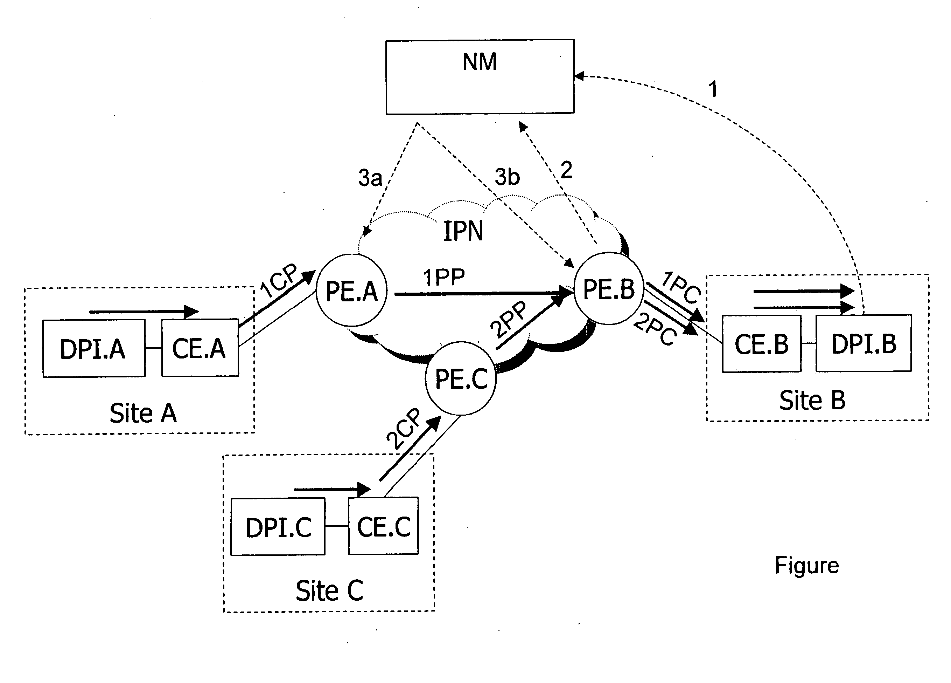

The above and other objects and features of the invention will become more apparent and the invention itself will be best understood by referring to the following description of an embodiment taken in conjunction with the accompanying drawing wherein the Figure represents a telecommunication network wherein is used a method for resolving congestions according to the present invention.

The telecommunication network represented at the Figure is a IP Network comprising a plurality of interconnected nodes also called Provider Edges of which three are shown PE.A, PE.B and PE.C. A Provider Edge is a device or set of devices at the edge of the provider network with the functionality that is needed to interface the customer on the one hand and to a MultiProtocol Label Switching MPLS network on the other hand. A provider edge can be a router or a switch. In a provider edge, all the MPLS tunnels are set-up and terminated and all Virtual Private Network VPN functionalities reside in the provider edge. All these nodes or provider edges PE.A, PE.B and PE.C are coupled to a Network Manager NM, as well as to a distinct site Site A, Site B and Site C respectively.

Each site Site A, Site B, Site C comprises a Customer Equipment CE.A, CE.B, CE.C linked to a Deep Packet Inspection module DPLA, DPLB, DPI.C respectively. The Deep Packet Inspection is a classification technique in a network node that is based on information in headers set by higher layers than the network layer.

In the present example, a first communication is set up between the Customer Equipment CE.A and the Customer Equipment CE.B, whilst a second communication is set up between the Customer Equipment CE.C and this Customer Equipment CE.B.

The first communication between Site A and Site B is indicated by arrow 1CP from the Customer Equipment CE.A to the node PE.A, arrow 1PP from the node PE.A to the node PE.B via the IP Network IPN, and arrow 1PC from the node PE.B to the Customer Equipment CE.B.

The second communication between Site C and Site B is indicated by arrow 2CP from the Customer Equipment CE.C to the node PE.C, arrow 2PP from the node PE.C to the node PE.B via the IP Network IPN, and arrow 1PC from the node PE.B to the Customer Equipment CE.B.

In such a network, the network manager NM is informed of a congestion problem, for instance at Site B, by an external trigger received from the Deep Packet Inspection DPI.B belonging to Site B, as indicated by arrow 1 in the Figure.

This trigger is for instance a Network Event Notification indicating the service level agreement for one specified traffic class (e.g. Quality-of-Service QoS) from the Deep Packet Inspection module DPI.A of Site A to the Deep Packet Inspection module DPLB of Site B, to which the Site A is connected and that may be involved in this congestion.

With this trigger, the Network Manager NM finds the associated nodes or Provider Edges PE.A and PE.B in the IP Network or Network Provider IPN.

Based only on this notification of the trigger, it is not yet possible for the Network Manager NM to determine if the congestion node is in the link between the Customer Equipment CE.A and the node PE.A (arrow 1CP) or in the link between the node PE.B and the Customer Equipment CE.B (arrow 1PC).

In order to solve this problem, the Network Manager NM queries, upon reception of the trigger, traffic statistics for specific traffic class on node PE.B towards Customer Equipment CE.B, i.e. for only ONE of the two nodes (here PE.B).

The network manager NM thereby retrieves not only the above Network Event Notification, but also additional information such as traffic statistics exchanged between the Deep Packet Inspections DPI.A and DPI.B, downstream traffic between the node PE.B and the Customer Equipment CE.B, DSLA violation information, QoS Class, etc ... These statistics are retrieved as indicated by arrow 2 in the Figure.

The network Manager then analyzes and compares the information received from the deep packet inspection DPLB of Site B and the traffic statistics retrieved from the node PE.B.

In the case that the number of lost packets for the specified traffic class has increased for the node PE.B, the network manager NM updates (adapts) the policy configuration of the downstream link 1PC, 2PC between this node PE.B and the Customer Equipment CE.B of Site B, as indicated by arrow 3b, in order to fix the congestion problem.

Otherwise, the network manager NM decides that the congestion problem is located at Site A and updates (adapts) the policy configuration of the upstream link 1 CP between the Customer Equipment CE.A of Site A and the node PE.A coupled thereto, as indicated by arrow 3a.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A method to resolve congestions in a telecommunication network comprising a plurality of interconnected nodes (PE.A, PE.B, PE.C) all coupled to a Network Manager (NM), each node being further coupled to a distinct Customer Equipment (CE.A, CE.B, CE.C) at a corresponding site (Site A, Site B, Site C),
***characterized in that*** said congestion is indicated (1) by a trigger received at said network manager (NM) from a first site (Site B) involved in said congestion, said trigger further comprising a Network Event Notification indicating the service level agreement for a predetermined traffic class from a second site (Site A) to said first site (Site B),
***in that,*** upon reception of said trigger, said network manager retrieves (2) from the first node (PE.B) coupled to said first site (Site B) traffic statistics for said predetermined traffic class,
***and in that***
if said traffic statistics indicate that the number of lost packets for said predetermined traffic class has increased for said first node (PE.B), said network manager updates (3b) the policy configuration of the link between said first node (PE.B) and the first Customer Equipment (CE.B) of said first site (Site B),
otherwise, if said traffic statistics indicate that the number of lost packets for said predetermined traffic class has not increased for said first node (PE.B), said network manager updates (3a) the policy configuration of the link between the second Customer Equipment (CE.A) of said second site (Site A) and the second node (PE.A) coupled thereto.

2. The method according to claim **1, *characterized in that*** said trigger is provided by a Deep Packet Inspection (DPI.B) associated to the first Customer Equipment (CE.B) of said first site (Site B).

3. The method according to claim **1,** ***characterized in that*** said telecommunication network is an IP network.

4. The method according to claim **1, *characterized in that*** said predetermined traffic class is a Quality-or-Service (QoS) class.

## Patentansprüche

1. Ein Verfahren zur Überlastungsauflösung in einem Telekommunikationsnetzwerk, umfassend eine Vielzahl von miteinander verbundenen Knoten (PE.A, PE.B, PE.C), die alle mit einem Netzwerkmanager (NM) gekoppelt sind, wobei jeder Knoten außerdem mit einer verschiedenen Teilnehmereinrichtung (CE.A, CE.B, CE.C) an einem entsprechenden Ort (Ort A, Ort B, Ort C) gekoppelt ist,
***dadurch gekennzeichnet, daß*** die Überlastung durch einen Trigger angezeigt (1) wird, der am Netzwerkmanager (NM) von einem ersten von Überlastung betroffenen Ort (Ort A) empfangen wird, wobei der Trigger außerdem eine Benachrichtigung für Netzwerkereignisse umfaßt, die die Dienstleistungsvereinbarung für eine vorgegebene Verkehrsklasse von einem zweiten Ort (Ort B) an den ersten Ort (Ort B) anzeigt,
***daß*** nach Empfangen des Triggers der Netzwerkmanager vom ersten Knoten (PE.B), der mit dem ersten Ort (Ort B) gekoppelt ist, das Verkehrsverhalten für die vorgegebene Verkehrsklasse abruft (2),
***und daß,***
wenn das Verkehrsverhalten anzeigt, daß die Anzahl der verlorenen Pakete für die vorgegebene Verkehrsklasse für den ersten Knoten (PE.B) zugenommen hat, der Netzwerkmanager (3b) die Richtlinienkonfiguration der Verbindung zwischen dem ersten Knoten (PE.B) und der ersten Teilnehmereinrichtung (CE.A) des ersten Ortes (Ort B) aktualisiert,
anderenfalls, wenn das Verkehrsverhalten anzeigt, daß die Anzahl der verlorenen Pakete für die vorgegebene Verkehrsklasse für den ersten Knoten (PE.B) nicht zugenommen hat, der Netzwerkmanager (3a) die Richtlinienkonfiguration der Verbindung zwischen der zweiten Teilnehmereinrichtung (CE.A) des zweiten Ortes (Ort A) und dem damit gekoppelten zweiten Knoten (PE.A) aktualisiert.

2. Das Verfahren nach Anspruch 1, ***dadurch gekennzeichnet, daß*** der Trigger durch eine Tiefenpaketprüfung (DPI.B) bereitgestellt wird, die mit der ersten Teilnehmereinrichtung (CE.B) des ersten Ortes (Ort B) verbunden ist.

3. Das Verfahren nach Anspruch 1, ***dadurch gekennzeichnet, daß*** das Telekommunikationsnetzwerk ein IP-Netzwerk ist.

4. Das Verfahren nach Anspruch 1, ***dadurch gekennzeichnet, daß*** die vorgegebene Verkehrsklasse eine Dienstgüteklasse (Quality-of-Service/QoS) ist.

## Revendications

1. Procédé pour remédier aux encombrements dans un réseau de télécommunication comprenant une pluralité de noeuds interconnectés (PE.A, PE.B, PE.C), tous connectés à un gestionnaire de réseau (NM), chaque noeud étant en outre connecté avec un équipement d'abonné (CE.A, CE.B, CE.C) distinct sur un site correspondant (Site A, Site B. Site C),
***caractérisé en ce que*** ledit encombrement est indiqué (1) par un signal déclencheur reçu par ledit gestionnaire de réseau (NM) de la part d'un premier site (Site B) impliqué dans ledit encombrement, ledit signal déclencheur comprenant en outre une notification d'événement de réseau indiquant l'accord de niveau de service pour une classe de trafic prédéterminée d'un deuxième site (Site A) vers ledit premier site (Site B),
***en ce que*** sur réception dudit signal déclencheur, ledit gestionnaire de réseau récupère (2) auprès du premier noeud (PE.B) connecté audit premier site (Site B) les statistiques de trafic pour ladite classe de trafic prédéterminée,
***et en ce que***
si lesdites statistiques de trafic indiquent que le nombre de paquets perdus pour ladite classe de trafic prédéterminée a augmenté pour ledit premier noeud (PE.B), ledit gestionnaire de réseau met à jour (3b) la configuration stratégique du lien entre ledit premier noeud (PE.B) et le premier équipement d'abonné (CE.B) dudit premier site (Site B),
sinon, si lesdites statistiques de trafic indiquent que le nombre de paquets perdus pour ladite classe de trafic prédéterminée n'a pas augmenté pour ledit premier noeud (PE.B), ledit gestionnaire de réseau met à jour (3a) la configuration stratégique du lien entre le deuxième équipement d'abonné (CE.A) dudit deuxième site (Site A) et le deuxième noeud (PE.A) connecté à celui-ci.

2. Procédé selon la revendication 1, ***caractérisé en ce que*** ledit signal déclencheur est réalisé par une inspection profonde des paquets (DPI.B) associés au premier équipement d'abonné (CE.B) dudit premier site (Site B).

3. Procédé selon la revendication 1, ***caractérisé en ce que*** ledit réseau de télécommunication est un réseau IP.

4. Procédé selon la revendication 1, ***caractérisé en ce que** ladite* classe de trafic prédéterminée est une classe de qualité de service (QoS).
